# EUROPÄISCHE PATENTSCHRIFT

(11) **EP 2 418 987 B1**
(45) Veröffentlichungstag und Bekanntmachung des Hinweises auf die Patenterteilung: **22.03.2017**
(21) Anmeldenummer: 10713299.5
(22) Anmeldetag: 13.04.2010
(51) Int. Cl.: A47J 31/36

(54) **Brühmodul**
Brewing module
Module d'infusion

(30) Priorität: 15.04.2009 EP 09405067
(43) Veröffentlichungstag der Anmeldung: 22.02.2012
(73) Patentinhaber: Qbo Coffee GmbH, 8304 Wallisellen (CH)
(72) Erfinder: DEUBER, Louis, CH-8805 Richterswil (CH)
(74) Vertreter: Frei Patent Attorneys
(86) Internationale Anmeldenummer: PCT/CH2010/000099
(87) Internationale Veröffentlichungsnummer: WO 2010/118545

(56) Entgegenhaltungen:
- WO-A-2005/060801
- WO-A-2007/016977
- WO-A1-2006/003115
- FR-A1- 2 908 970
- US-B1- 6 182 554

## Beschreibung

Die Erfindung betrifft Extraktionsgeräte zum Zubereiten von Getränken oder dergleichen aus einem in einer Kapsel enthaltenen Extraktionsgut, beispielsweise gemahlenem Kaffee. Sie betrifft insbesondere ein Brühmodul für ein Extraktionsgerät sowie ein Extraktionsgerät mit einem solchen Brühmodul.

Extraktionsgeräte wie z.B. in WO 2006/003115 offenbart zum Zubereiten von Getränken oder dergleichen aus einem in einer Portionsverpackung vorhandenen Extraktionsgut sind beispielsweise als Kaffee- oder Espressomaschinen bekannt und erfreuen sich nach wie vor steigender Beliebtheit. In vielen entsprechenden Systemen sind die Portionsverpackungen als Kapseln ausgebildet, in denen das Extraktionsgut bspw. luftdicht abgeschlossen ist. Für die Extraktion wird die Kapsel an zwei einander gegenüberliegenden Seiten angestochen. Auf der ersten Seite wird eine Extraktionsflüssigkeit - im Allgemeinen heisses Wasser - eingeleitet. Auf der zweiten Seite wird das Extraktionsprodukt aus der Kapsel ausgeleitet. Dies geschieht in einem sogenannten Brühmodul. Ein solches weist eine Brühkammer auf, in der die Kapsel aufgenommen wird. Besonders beliebt sind Brühmodule, bei welchen die Kapsel in das Brühmodul eingelegt und die Brühkammer bspw. mittels eines Bedienhebels verschlossen wird, wobei beim erneuten Öffnen der Brühkammer nach dem Brühvorgang die Kapsel selbsttätig aus der Brühkammer entfernt und in einen Kapselbehälter ausgeworfen wird. Solche Brühmodule mit selbsttätigem Kapselauswurf sind im Allgemeinen als horizontale Brühmodule ausgebildet, d.h. der Kapseleinwurf erfolgt von oben, das Verschliessen der Brühkammer ist eine horizontale Relativbewegung zweier Brühkammerteile, die Brühflüssigkeit fliesst im wesentlichen horizontal, und der Kapselbehälter ist unterhalb der Brühkammer ausgebildet.

Die Veröffentlichungen EP 1'721'553, EP 1'646'305, WO 2008/004116, WO 2007/135135 und WO 2008/014830 zeigen Beispiele von Geräten mit horizontalen Brühkammern. Alle diese Geräte sind zur für Kapseln bestimmt, die um die horizontale Achse rotationssymmetrisch sind. Die Kapsel wird in eine Zwischenposition eingelegt, in welcher ein umlaufender Kragen der Kapsel durch eigens dafür vorgesehene Haltemittel gehalten wird. Anschliessend werden die zwei Brühkammerteile relativ zueinander verschoben, um die Kapsel in eine Brühkammer einzuschieben. Dadurch wird die Kapsel von der Zwischenposition in eine Brühposition geschoben, wobei auch die Verbindung zwischen den Haltemitteln und dem Kragen gelöst wird. Nach dem Brühvorgang wird die Brühkammer geöffnet, und die Kapsel fällt - nicht mehr durch die Haltemittel gehalten - in den Kapselbehälter.

Auch wenn sich die Konzepte der vorstehenden Schriften teilweise unterscheiden (horizontale Verschiebung oder Kippbewegung zwischen erster und zweiter Position, Form der Kapsel etc.), ist ihnen doch gemeinsam, dass für das Halten in der Zwischenposition und/oder das Führen in die Auswurfposition der umlaufende Kragen der Kapsel sowie eigens dafür vorgesehene Haltemittel benötigt werden. Das hat den Nachteil, dass es wenige Freiheitsgrade bei der Ausgestaltung der Kapsel gibt; ausserdem müssen Brühkammer und Halte- und Lösemechanismen relativ kompliziert und daher aufwändig gestaltet werden.

Eine weitere Problematik betrifft die Handhabung des Extraktionsgutes (meist gemahlener Kaffee) in der Kapsel. Es wäre an sich wünschenswert und für den Brühvorgang vorteilhaft, wenn dieses im komprimierten Zustand wäre, da dann der Durchflusswiderstand für die Extraktionsflüssigkeit optimal ist. Die gängigen Kapseln - die ja anstechbar sein müssen - haben jedoch nicht genügend formsteifes Wandmaterial um das Extraktionsgut im komprimierten Zustand zu halten. In der WO 2008/01564 wird vorgeschlagen, das Extraktionsgut in Form einer komprimierten Tablette in die Kapsel einzubringen und die Kapsel dann unter Vakuum abzuschliessen, so dass der flexible Kapseldeckel durch das Vakuum mittig nach innen ausgelenkt und auf die Oberfläche der Kapsel gedrückt wird. Beim Transport der Kapsel ist jedoch damit zu rechnen, dass das Extraktionsgut auflockert und die kompakte Tablette keinen Bestand hat.

Ausgehend vom Stand der Technik stellt sich der Erfindung erstens die Aufgabe, ein Brühmodul für ein Extraktionsgerät, beispielsweise eine Kaffeemaschine, zum portionenweisen Zubereiten eines Getränkes oder anderen Extraktionsprodukts aus einem in einer Kapsel verpackten Extraktionsgut, zur Verfügung zu stellen, das Nachteile bestehender Brühmodule überwindet und das eine einfache und kompakte Bauweise sowie eine grosse Flexibilität beim Kapseldesign ermöglicht. Zweitens stellt sich die Aufgabe eine Brühmodul zur Verfügung zu stellen, welches neue Ansätze zum Komprimieren des Extraktionsguts ermöglicht.

Gemäss einem ersten Aspekt weist das Brühmodul ein erstes Brühmodulteil und ein relativ zu diesem bewegbares zweites Brühmodulteil auf, wobei das erste und das zweite Brühmodulteil eine Ausleitvorrichtung zum Ausleiten eines Extraktionsprodukts aus der Kapsel und einen Injektor zum Einleiten einer Extraktionsflüssigkeit in die Kapsel bilden. In einer geschlossenen Stellung (das erste und zweite Brühmodulteil sind bspw. "zusammen") wird eine Brühkammer gebildet, welche die Kapsel beim Brühvorgang mindestens teilweise umgibt. Gemäss dem ersten Aspekt zeichnet sich das Brühmodul nun im Wesentlichen dadurch aus, dass das erste Brühmodulteil eine Kapselaufnahme mit einer Auflage und mit Seitenwänden bildet. Die Kapsel wird direkt in die Kapselaufnahme eingeworfen, so dass sie durch die Seitenwände geführt auf der Auflage zu liegen kommt. Zum Verschliessen der Brühkammer wird das zweite Brühmodulteil relativ zum ersten Brühmodulteil linear - d.h. translatorisch bzw. im Wesentlichen translatorisch - bewegt, aber die Kapsel bleibt so weit in Position, dass die Auflage und die Seitenwände auch Wandungen der Brühkammer bilden - die Kapsel muss also nicht von einer Zwischenposition in eine separate Brühkammer eingeschoben werden. Insbesondere muss die Kapsel beim Verschliessen der Brühkammer nicht verkippt werden, sondern ihre Orientierung bleibt im Wesentlichen erhalten. Ein durch den erfindungsgemässen Ansatz überflüssig gemachtes Verkippen der Kapsel würde einen komplizierten Mechanismus bedingen.

Dabei kann- wie in den nachfolgend beschriebenen Ausführungsformen - das erste Brühmodulteil die Ausleitvorrichtung und das zweite Brühmodulteil den Injektor bilden. Alternativ dazu kann auch das Umgekehrte der Fall sein, also das erste Brühmodulteil bildet den Injektor und das zweite die Ausleitvorrichtung. Es sind sogar Konfigurationen denkbar, bei denen die Ausleitvorrichtung und der Injektor beide vom selben Brühmodulteil gebildet werden, wobei dann das andere Brühmodulteil insbesondere die Funktion des Ausübens einer Druckkraft gegen die Kapsel und/oder des Abdichtens aufweisen kann.

Die Ausleitvorrichtung und der Injektor sind vorzugsweise einander gegenüberliegend angeordnet und weisen beispielsweise eine Ausleitplatte mit mindestens einer von der Platte in die Brühkammer hinein abstehende Anstechspitze bzw. eine Injektorplatte, ebenfalls mit mindestens einer von der Platte in die Brühkammer hinein abstehende Injektorspitze auf. Die Anstechspitzen sind bspw. zum Anstechen von tiefgezogenen Kunststoff-Kapselwandungen, bspw. aus Polypropylen mit bspw. einer Dicke von zwischen 0.2 mm und 0.4 mm, bspw. zwischen 0.25 mm und 0.35 mm ausgebildet; als solche unterscheiden sie sich markant von Anstechspitzen für Aluminiumkapseln. Auch Anstechvorrichtungen für andere Kapselwandungsmaterialien als tiefgezogene Kunststoffe können jedoch vorhanden sein.

Die Seitenwände müssen nicht klar abgetrennt von der Auflage sein; vielmehr kann insbesondere bei rotationssymmetrischen oder sonstwie gerundeten Kapselformen die Auflage eine entsprechend der Kapselform gekrümmte Auflagefläche bilden und also eine zu den Seiten hochgezogene Form aufweisen. Insgesamt sollte lediglich die Kapselaufnahme ein die Kapsel haltendes und seitlich führendes Bett bilden. Bevorzugt ist die Kapselaufnahme so auf die Kapselform abgestimmt, dass die Kapsel flächig aufliegt.

Bevorzugt umschliesst die Brühkammer die Kapsel vollständig, d.h. die Kapselaufnahme und das zweite Brühmodulteil weisen Elemente auf, die passgenau einander entsprechen und in der geschlossenen Stellung zusammen die Brühkammer bilden. Dabei werden wie erwähnt die untere und mindestens teilweise die seitliche Wandung durch die Kapselaufnahme gebildet. Die Wandungen in axialer Richtung (bezogen auf die Führung der Brühflüssigkeit und/oder auf die Bewegungsrichtung der relativen Bewegung der Brühmodulteile) bilden beispielsweise eine Injektorplatte mit mindestens einer von der Platte in die Brühkammer hinein abstehende Injektorspitze und eine Ausleitplatte, ebenfalls mit mindestens einer von der Platte in die Brühkammer hinein abstehende Anstechspitze. Gegen oben - also zur Einwurföffnung hin - bildet die Wandung dann ein Brühkammerdeckel des zweiten Brühmodulteils. Das zweite Brühmodulteil kann ausserdem auch Bereiche der seitlichen Wandung - die dann passgenau mit entsprechenden Bereichen der Kapselaufnahme zusammenpassen - aufweisen.

Die vom ersten Brühmodulteil gebildeten Wandungsteile und die vom zweiten Brühmodulteil gebildeten Wandungsteile können in der geschlossenen Position gegeneinander abgedichtet sein, bspw. durch eine umlaufende Formdichtung. Eine dergestalt abgeschlossene Brühkammer ermöglicht ein Spülen des Extraktionsgeräts bzw. des Brühmoduls, ohne dass eine Kapsel eingelegt werden müsste - was für den Benutzer ein markanter Vorteil ist. Dies schliesst jedoch die Verwendung einer Spül- oder Platzhalterkapsel während des Spül- oder Reinigungsvorgangs - mit abgeschlossener oder nicht vollständig abgeschlossener Brühkammer - nicht aus.

Das Brühmodul kann so ausgebildet sein, dass sich die Kapsel beim Verschliessen der Brühkammer im wesentlichen nicht bewegt - bis auf eine axiale Verschiebung um etwa die Länge einer Anstechspitze zum Anstechen der Kapsel. Insbesondere ist das Brühmodul so ausgebildet, dass die Kapsel beim Verschliessen der Brühkammer nicht verkippt, wird, sondern dass seine Schwerpunktachse stationär bleibt.

Gemäss einer bevorzugten Ausführungsform ist die Auflagefläche und bspw. die ganze Kapselaufnahme oder das ganze Brühmodul gegenüber der Horizontalen verkippt; sie ist zum ersten Brühmodulteil hin nach unten abschüssig. Das bedeutet, dass eine Befestigung des Brühmodulteils in der Kaffeemaschine so ausgebildet ist, dass diese Verkippung bzw. Abschüssigkeit vorhanden ist, wenn die Kaffeemaschine auf einer horizontalen Unterlage bestimmungsgemäss abgestellt ist. Zu diesem Zweck kann das Brühmodul bspw. ein Befestigungselement aufweisen, das so mit einem Brühmodul-Gerüst verbunden ist, dass diese genannte Neigung des Brühmoduls vorhanden ist. Die Neigung der Auflagefläche zur Horizontalen hin - oder in einem allgemeinen Fall die Neigung einer Kapsel-Schwerpunktachse zur Horizontalen hin - beträgt vorzugsweise zwischen 2° und 10°.

Im Weiteren können noch Mitnahmemittel vorhanden sein. Diese dienen der mechanischen Unterstützung des Kapselauswurfs durch Mitnehmen der Kapsel beim Öffnen der Kapsel mit dem zweiten Brühmodulteil bis in eine Position, in welcher die Kapsel in einen Kapselbehälter fallen kann. Sie können auf die Kapsel drückende Feder (bspw. als widerhakenartig angeordnetes Federplättchen), als Klemmeinrichtung (bspw. in der Art eines "friends") oder als sonstiges mechanisches, bspw. reibschlüssig wirkendes Mittel vorhanden sein. Gemäss einer speziell bevorzugten Ausführungsform sind die Mitnahmemittel gemäss dem zweiten Aspekt der Erfindung ausgebildet und dienen gleichzeitig als Kompressionsmittel, durch welche die Kapsel in der Brühkammer volumenverringernd komprimiert wird.

Das Vorgehen gemäss dem ersten Aspekt ermöglicht zunächst eine sehr kompakte Bauweise, da die Kapsel ohne Kragen ausgestaltet werden kann und dadurch die Brühkammer auch keine entsprechende Aufnahme und Halterung für einen Kragen aufweisen muss.

Weiter ist ein umlaufender Kragen der Kapsel zwar nach wie vor möglich aber nicht mehr notwendig. Vielmehr kann die Kapselaufnahme eine Auflage bildend beliebig entsprechend der Kapselform ausgestaltet sein.

Kapselformen ohne umlaufenden Kragen sind sogar besonders bevorzugt. Als Folge davon kommen auch Kapselformen in Betracht, die nicht mehr durch einen umlaufenden Kragen anisotrop versteift werden, was mehr Freiheitsgrade ermöglicht, wenn das Extraktionsgut in der Brühposition gemäss dem zweiten Aspekt der Erfindung durch Zusammendrücken der Kapsel komprimiert werden soll.

Gemäss einer speziellen Ausführungsform ist bspw. die Brühkammer für die Aufnahme einer im sich Gegensatz zum Stand der Technik nicht zur Ausleit- oder Injektorseite konisch verbreiternden Kapsel sondern einer bspw. würfelförmigen oder quaderförmigen Kapsel ausgebildet. Unter quader- bzw. würfelförmig versteht man hier eine Form, die von der geometrisch exakten Quader- bzw. Würfelform nicht so weit abweichen, dass sie funktionell sehr verschieden wären; bspw. ist die Form eines Pyramidenstumpfs mit rechteckiger bzw. quadratischer Grundfläche, wobei die an die Grundfläche angrenzenden Seitenflächen gegenüber der Senkrechten zur Grundfläche um nur einen kleinen Neigungswinkel α von bspw. höchstens 2°, vorzugsweise höchstens ca. 1° geneigt sind, mit eingeschlossen. Die Quader- bzw. Würfelform schliesst einen umlaufenden, vom Kapselkörper auf der Ebene einer Endfläche abstehenden Kragen aus, der zum Halten der Kapsel in Führungsschlitzen vorgesehen ist. Die Quader- bzw. würfelförmige Kapsel kann trotzdem herstellungstechnisch bedingte umlaufende Ränder (bspw. eine Schweissbraue) aufweisen kann, die bspw. maximal 1.5 mm oder 1 mm oder weniger seitlich hervorstehen und die bspw. von einer Endflächen-Ebene abgesetzt sind. Bevorzugt weist das Brühmodul ausserdem Mittel auf, welche im verschlossenen Zustand der Brühkammer verhindern, dass Brühflüssigkeit an der Kapsel vorbei zur Ausleitvorrichtung gelangen kann. Aufgrund dieser Mittel ist ein Kragen der Kapsel auch für die Dichtwirkung nicht nötig, und auch eine konische Kapselform ist nicht notwendig. Das erfmdungsgemässe Vorgehen schliesst aber eine Dichtung mit den aus dem Stand der Technik bekannten Mitteln und also mit einem umlaufenden Kragen mit seiner labyrinthdichtungsartigen Wirkung keinesfalls aus.

Gemäss dem zweiten Aspekt der Erfindung wird ein Brühmodul, insbesondere nach irgend einer Ausführungsform gemäss ersten Aspekt, zur Verfügung gestellt, das ein erstes Brühmodulteil und ein relativ zu diesem linear bewegbares zweites Brühmodulteil aufweist, wobei wie beim ersten Aspekt und wie an sich bekannt das erste und das zweite Brühmodulteil eine Ausleitvorrichtung zum Ausleiten eines Extraktionsprodukts aus der Kapsel und einen Injektor zum Einleiten einer Extraktionsflüssigkeit in die in Kapsel und eine Brühkammer bilden, welche die Kapsel beim Brühvorgang mindestens teilweise umgibt. Gemäss dem zweiten Aspekt der Erfindung sind nun Kompressionsmittel vorhanden, durch welche die Kapsel in der Brühkammer volumenverringernd wie in Anspruch 1 beschrieben komprimiert wird.

Die Kompression erfolgt bevorzugt durch reversibel ins Innere der Brühkammer eingreifende Anpresselemente, d.h. die Anpresselemente werden beim Verschliessen der Brühkammer so bewegt, dass sie in die Brühkammer eingreifen, und sie werden beim Öffnen wieder entfernt, so dass die Kapselaufnahme, in welche die Kapsel anfänglich eingeworfen oder eingelegt wird frei von Anpresselementen der Kompressionsmittel ist. Bevorzugt werden die Kompressionsmittel beim Übergang vom offenen in den geschlossenen Zustand der Brühkammer mindestens teilweise radial bewegt und üben in radialer Richtung Druck auf die Kapsel aus.

Beispielsweise können die Anpresselemente im zweiten Brühmodulteil radial verschiebbar gelagert sein und beim Bewegen des zweiten Brühmodulteils durch eine nicht mitbewegte Steuerkurve entgegen einer Federkraft nach innen gedrückt werden.

Die Anpresselemente können bspw. als zwei Anpressbolzen ausgebildet sein, die einander gegenüberliegend angeordnet sind und beim Verschliessen der Brühkammer gegeneinander bewegt werden..

Bevorzugt sind die Kompressionsmittel so ausgebildet, dass sie die Kapsel in einer zentralen Region stärker komprimieren als in einer peripheren Region oder primär in einer Region, in der die Brühflüssigkeit injiziert wird, zusammengedrückt wird und so dort stärker komprimiert wird als in davon beabstandeten (in Bezug auf zur axialen Richtung senkrechte Richtungen) Regionen. Die pulverartige Kapselfüllung wird jedoch oft bis zu einem gewissen Grad den Druck auch dorthin übertragen, wo die Kompressionsmittel nicht angreifen, d.h. bis zu einem gewissen Grad wird je nach Füllmenge der ganze Kapselinhalt komprimiert.

Ein weiteres bevorzugtes Merkmal von Ausführungsformen des ersten und/oder des zweiten Aspekts der Erfindung betrifft die Anordnung der Anstechspitzen des Injektors und der Ausleitvorrichtung - insbesondere im Zusammenhang mit annähernd würfelförmigen oder quaderförmigen Kapseln. Das genannte Merkmal sieht vor, dass die Anstechspitzen des Injektors und der Ausleitvorrichtung nicht miteinander entlang der horizontalen Achse fluchtend angeordnet sind, sondern bspw. die Anstechspitzen des Injektors weiter aussen angeordnet sind als die Anstechspitzen der Ausleitvorrichtung. Die Brühflüssigkeit kann daher nicht den direktesten Weg in horizontaler (axialer) Richtung nehmen, sondern muss sich gegen innen bewegen, was besonders in Kombination mit dem Vorgehen gemäss dem zweiten Aspekt einen optimalen Durchflusswiderstand ergibt und ein komplettes Durchtränken des gesamten Würfelinhalts gewährleistet.

Ebenfalls Gegenstand der Erfindung ist ein Extraktionsgerät, insbesondere eine Kaffeemaschine, mit einem der genannten Brühmodule.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen zeigen teilweise einander entsprechende Elemente von Figur zu Figur unterschiedlichen Grössen. Es zeigen:
- Figur 1 eine Ansicht eines erfindungsgemässen Brühmoduls;
- Figur 2 eine Ansicht des Brühmoduls gemäss Figur 1, wobei Teile des Moduls nicht dargestellt sind;
- Figur 3 eine weitere Ansicht des Brühmoduls gemäss Figur 1, wobei Teile des Moduls nicht dargestellt sind;
- Figur 4 eine Darstellung des Brühmoduls gemäss Figur 1 entlang einer axialen vertikalen Ebene geschnitten; und
- Figuren 5-7 je Darstellungen des Brühmoduls gemäss Figur 1 entlang einer axialen horizontalen Ebene geschnitten, in drei verschiedenen Zuständen.

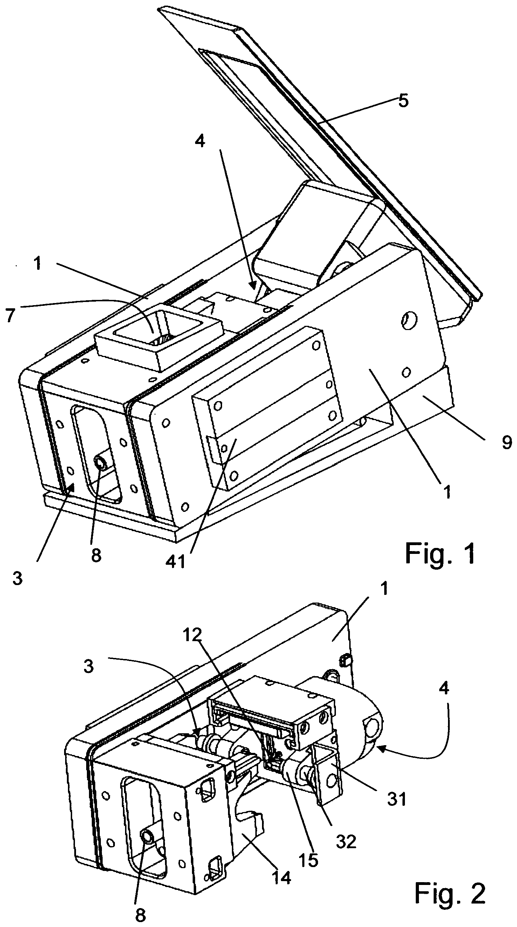

Das Brühmodul gemäss **Figuren 1-4** weist in an sich bekannter Art zwischen einem Gerüst mit zwei vertikalen Führungswänden 1 geführt eine Ausleitvorrichtung 3 und einen Injektor 4 auf, die durch einen um einen Drehzapfen 6 schwenkbaren Bedienhebel 5 relativ zueinander verschiebbar sind. In der gezeichneten Ausführungsform ist der Injektor 4 durch eine Schwenkbewegung des Bedienhebels 5 nach unten in Richtung der Ausleitvorrichtung 3 verschiebbar, während letztere relativ zum Gerüst unbeweglich ist.

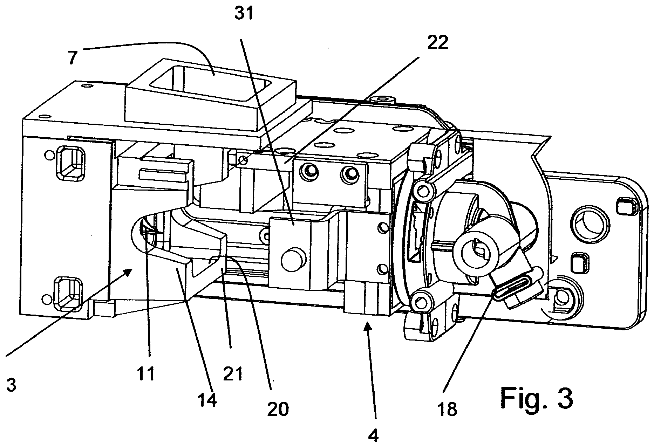

In Figuren 1 und 3 gut sichtbar ist die Einwurföffnung 7 zum Einwerfen einer kubischen Portionenkapsel. Die Einwurföffnung ist im Gerüst ausgebildet, befindet sich im Bereich der Ausleitvorrichtung 3 und bleibt wie diese bei einer Bewegung des Bedienhebels stationär. Die Einwurföffnung kann sich gegen unten verengend leicht konisch sein um so beim Einwerfen eine zentrierende Wirkung auf die Kapsel zu haben, ohne dass die Gefahr eines Verkantens der Kapsel zu gross wäre.

Im Betriebszustand dient das Brühmodul als horizontale Brühmodul einer Kaffeemaschine, welche nebst dem Brühmodul einen Wassertank, eine Wasserheizungsvorrichtung (bspw. Durchlauferhitzer) und eine Pumpe zum Zuführen von Brühwasser zum Injektor 4 aufweist. Die entsprechenden Zuführkanäle 18 des Injektors können wie an sich bekannt ausgebildet sein; sie sind nicht Gegenstand der Erfindung und werden hier nicht eingehender beschrieben. Der Injektor weist ausserdem mindestens eine Anstechspitze 12 mit zugeordneter Zuführöffnung auf, so dass die Kapsel angestochen und durch die Zuführöffnung mit der Extraktionsflüssigkeit versorgt werden kann. Die Kaffeemaschine weist weiter bspw. einen unterhalb der Brühkammer angeordneten Kapselbehälter auf, in welchen die Kapsel nach dem Brühvorgang durch Anheben des Bedienhebels selbsttätig ausgeworfen wird.

Auch die Ausleitvorrichtung 3 ist mit mindestens einer Anstechspitze 11 und einer zugeordneten Ausleitöffnung versehen. Weiter ist je nach Konfiguration auch eine Auslaufleitung vorhanden, mit welcher aus dem Austritt 8 der Ausleitvorrichtung austretender Kaffee (oder dgl.) so geführt wird, dass er in eine am vorgesehenen Ort abgestellte Tasse rinnt. Auch die zum Austritt 8 führenden Kanäle werden hier nicht eingehend beschrieben.

Die Anstechspitzen und Elemente, an denen sie befestigt sind, können gemäss der Patentanmeldung "Vorrichtung zum Ausleiten eines Extraktionsprodukts aus einer Portionsverpackung; Anstechvorrichtung und Extraktionsgerät", eingereicht unter Inanspruchnahme der Priorität der europäischen Patentanmeldung 09 405 066.3 ausgebildet sein, auf die hier explizit Bezug genommen wird.

Wie in Figur 1 ebenfalls ersichtlich weist das Brühmodul nebst dem Gerüst ein Befestigungselement 9 auf, an welchem das Gerüst befestigbar ist und welches seinerseits an einem Gehäuse oder Gerüst der Kaffeemaschine (nicht gezeigt) befestigt werden kann. Das Befestigungselement ist dabei so ausgebildet und mit dem Brühmodul-Gerüst verbunden, dass dieses leicht - bspw. um ca. 5° - gegenüber der Horizontalen geneigt ist, und zwar so, dass das bewegbare Brühmodulteil (d.h. hier der Injektor) sich leicht nach unten bewegt, wenn es sich auf sich auf das ortsfeste Brühmodulteil (d.h. hier die Ausleitvorrichtung) zubewegt. Die Funktion dieser leichten Neigung wird nachstehend noch eingehender erläutert.

Wie besonders gut in Figur 3 sichtbar ist, bildet die Ausleitvorrichtung 3 eine Kapselaufnahme mit einer die Auflagefläche 20 definierende Auflage 21 für die durch die Einwurföffnung eingeworfene Kapsel.

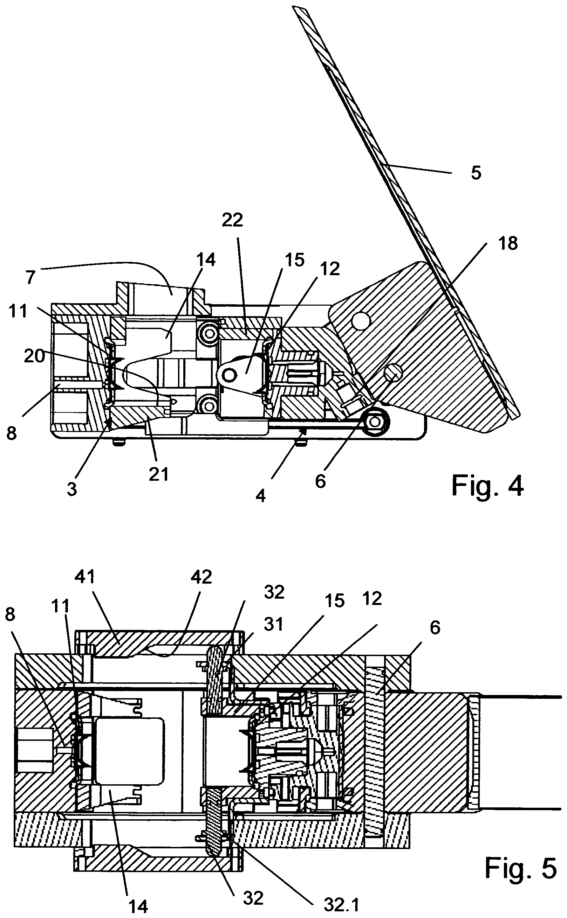

In Figuren 2, 4 sieht man, dass ausserdem die von der Ausleitvorrichtung 3 gebildete Kapselaufnahme erste Seitenwände 14 aufweist, die mit zweiten Seitenwänden 15 des Injektors 4 passgenau zusammenpassen, so dass beim Verschliessen der Brühkammer durch Verschwenken des Bedienhebels 5 die Brühkammer seitlich abgedichtet wird. Auch gegen unten (durch die Auflage 21) und gegen oben (durch ein Brühkammer-Deckelement 22) wird die Brühkammer abgedichtet, so dass Flüssigkeit nur durch die dafür vorgesehenen Öffnungen des Injektors 4 und der Ausleitvorrichtung 3 in die Brühkammer eintreten bzw. aus der Brühkammer austreten kann. Zu diesem Zweck können im Kontaktbereich entsprechende in den Figuren nicht gezeichnete Dichtmittel vorhanden sein, bspw. in der Form einer flexiblen Formdichtung.

Die bei offener Brühkammer (Figuren 1-5) durch die Einwurföffnung eingeworfene annähernd würfelförmige Kapsel wird durch die ersten Seitenwände geführt auf der Auflage 21 aufliegen. Durch die leichte Neigung des ganzen Brühmoduls (Fig. 1) wird ausserdem sichergestellt, dass sie beim Einwurf nicht unkontrolliert an einem Element der Ausleitvorrichtung zur Injektorseite hin abprallen und ungewollt nach unten in den Kapselbehälter fallen kann. Vielmehr sind die Position der Einwurföffnung und die Lage und Orientierung der Ausleitvorrichtung so aufeinander abgestimmt, dass die Kapsel bereits nach dem Einwurf in die von der Ausleitvorrichtung gebildete Kapselaufnahme zu liegen kommt und flächig auf der Auflagefläche aufliegt, die Vorderseite unter Umständen in Kontakt mit den Ausleitvorrichtungsseitigen Anstechspitzen.

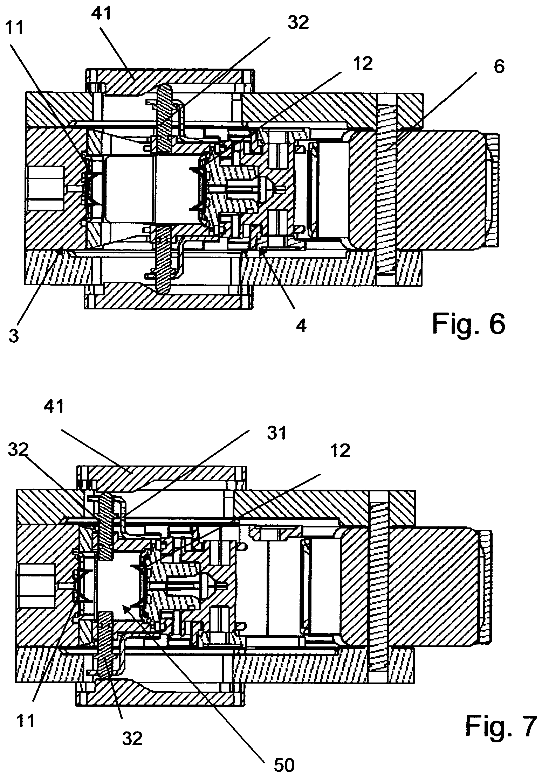

Der Injektor 4 weist ausserdem beiderseits je einen über ein Führungsblech 31 angebrachten Anpressbolzen 32 auf, der entgegen einer durch die Federkraft einer in der Figur nicht dargestellten, zwischen einem Kragen 32.1 des Anpressbolzens und der zweiten Seitenwand 15 angeordneten Feder gegen innen verschiebbar ist, so, dass er in einer Ruhelage (Figuren 2, 5) die zweiten Seitenwände 15 gegen innen nicht überragt und in einer ausgelenkten Lage (Figur 7) über die zweiten Seitenwände hinaus nach Innen und in den Brühraum hinein ragt. Der Kragen 32.1 bildet gleichzeitig auch zusammen mit dem Führungsblech 31 einen Anschlag für die radiale Bewegung des Anpressbolzens 32 nach aussen (Fig. 5)

Die Funktionsweise der Anpressbolzen 32 ist in **Figuren 5-7** verdeutlicht. Im Seitenteil des Brühmoduls ist beidseitig je eine Kurvenbahn 42 integriert. Eine solche kann entweder in der entsprechenden Seitenwand 1 selbst oder wie dargestellt in einem an der Seitenwand befestigten Kurvenbahnelement 41 ausgebildet sein. Der Anpressbolzen 32 wird von der Federkraft aussen gegen die Kurvenbahn 42 gedrückt. Beim Verschieben des Injektors 4 von der offenen in die geschlossene Stellung wird er aufgrund des Verlaufs der Kurvenbahn entgegen der Federkraft nach innen ausgelenkt (Fig. 7). Dadurch wird die eingeführte Kapsel beidseitig zusammengepresst; die Auslenkung der Anpressbolzen gegen innen kann bspw. zwischen 2 und 8 mm betragen, bevorzugt zwischen 3.5 und 7 mm. Dadurch wird das Kaffeepulver im Innern der Kapsel verdichtet, insbesondere in einem zentralen Bereich. Als Folge davon wird auch verhindert, dass mittig durchfliessende Brühflüssigkeit einen geringeren Widerstand erfährt als entlang der Kapselperipherie fliessende Brühflüssigkeit.

Beim Übergang in den in Figur 7 dargestellten geschlossenen Zustand der Brühkammer 50 wird ausserdem die Kapsel leicht zur Seite der Ausleitvorrichtung hin verschoben und dabei beidseitig - durch die Anstechspitzen 11 der Ausleitvorrichtung und die Anstechspitzen 12 des Injektors - angestochen.

Die Anpressbolzen 32 haben nebst dem Komprimieren des Extraktionsguts noch eine weitere Funktion. Sie bewirken, dass nach dem Brühvorgang beim Öffnen der Brühkammer die Kapsel aus der Kapselaufnahme so in Richtung der Injektorseite verschoben wird, dass sie nach unten und in einen (nicht gezeichneten) Kapselbehälter fallen kann. Dies geschieht automatisch, indem beim Verschieben des Injektors aus der in Figur 7 dargestellten Position zunächst die Anpressbolzen 32 noch ins Brühkammerinnere eingreifen und die Kapsel fixieren; diese Fixierung löst sich erst ungefähr in der in Figur 6 gezeichneten Position, in welcher der Kapselschwerpunkt schon jenseits der Auflagefläche 20 liegt. Diesem Effekt kommt je nach Kapselfüllgrad zusätzlich entgegen, dass das Extraktionsgut nach dem Brühvorgang oft aufgequollen ist und daher dazu neigen wird, die Kapselwände leicht gegen aussen auszubauchen.

Ebenfalls in Figuren 5-7 sichtbar ist, dass die Anstechspitzen 12 auf der Injektorseite einen anderen Abstand voneinander haben als die Anstechspitzen 11 auf der Ausleitvorrichtungsseite. Im dargestellten Beispiel sind die Anstechspitzen auf der Injektorseite markant weiter aussen angeordnet (hier in einem gegenseitigen Abstand von 19 mm) als die Anstechspitzen auf der Ausleitvorrichtungsseite (hier in einem gegenseitigen Abstand von 14 mm). Generell ist bevorzugt, dass die Abstände der Spitzen sich signifikant unterscheiden, bspw. um mindestens 15%.

Viele weitere Ausführungsformen sind denkbar. So ist bspw. ohne Weiteres möglich, die Funktion des Injektors und der Ausleitvorrichtung zu tauschen; d.h. der Injektor würde dann die Kapselaufnahme mit der Auflage bilden bspw. den Brühkammerdeckel aufweisen; alternativ oder insbesondere ergänzend dazu kann auch eine kinematische Umkehr vorgenommen werden, d.h. die Kapselaufnahme mit der Kapsel bewegt sich - bspw. zusammen mit der Kurvenbahn - auf den stationären anderen Brühmodulteil zu, anstatt dass wie beschrieben die Kapselaufnahme stationär bleibt.

Auch die Ausgestaltung der Kapselaufnahme kann variiert werden. Dies kann erstens zur Aufnahme von anders ausgeformten Kapseln geschehen. In Verbindung mit dem zweiten Aspekt sind Kapselformen ohne umlaufenden Kragen, speziell kubische Kapselformen besonders geeignet, aber auch andere, bspw. konventionelle Kapselformen sind möglich. Zweitens kann bspw. die Aufteilung der Brühkammerwandungs-Teile zwischen dem ersten und dem zweiten Brühmodulteil geändert werden. So können bspw. je nach dem die Seitenwände ganz durch das erste Brühmodulteil gebildet werden, oder es sind andere zueinander passgenaue Formen der Seitenwände denkbar, bspw. abgeschrägte. Ergänzend oder als Alternative kann auch ein Bereich der unteren Wandung (nebst der Auflage, die einen Grossteil der unteren Wandung bildet) durch das zweite Brühmodulteil gebildet sein, und/oder es kann auch ein Bereich der oberen Wandung (des Deckels), bspw. von der Tiefe entsprechend der Länge der Anstechspitzen 11 durch das erste Brühmodulteil gebildet werden.

## Patentansprüche

1. Brühmodul für ein Extraktionsgerät, beispielsweise eine Kaffeemaschine, zum portionenweisen Zubereiten eines Getränkes oder anderen Extraktionsprodukts aus einem in einer Kapsel verpackten Extraktionsgut, aufweisend ein erstes Brühmodulteil (3) und ein relativ zu diesem bewegbares zweites Brühmodulteil (4), wobei das erste und das zweite Brühmodulteil eine Ausleitvorrichtung zum Ausleiten eines Extraktionsprodukts aus der Kapsel und einen Injektor zum Einleiten einer Extraktionsflüssigkeit in die Kapsel und eine Brühkammer (50) bilden, welche die Kapsel beim Brühvorgang mindestens teilweise umgibt, wobei das Brühmodul ausserdem Kompressionsmittel aufweist, durch welche die Kapsel in der Brühkammer volumenverringernd komprimiert wird, **dadurch gekennzeichnet, dass** das Bewegen des zweiten Brühmodulteils relativ zum ersten Brühmodulteil linear entlang einer axialen Richtung erfolgt, und dass die Kompressionsmittel die Kapsel entlang einer von der axialen Richtung verschiedenen, bspw. dazu senkrechten Richtung komprimieren.

2. Brühmodul nach Anspruch 1, **dadurch gekennzeichnet, dass** die Kompressionsmittel mindestens ein ins Innere der geschlossenen Brühkammer ragendes Anpresselement (32), beispielsweise einen Anpressbolzen, aufweisen.

3. Brühmodul nach Anspruch 2, **dadurch gekennzeichnet, dass** das Anpresselement (22) im zweiten Brühmodulteil (4) radial verschiebbar gelagert ist und beim linearen Bewegen des zweiten Brühmodulteils (4) relativ zum ersten Brühmodulteil (3) durch eine Steuerkurve (42) entgegen einer Federkraft radial nach innen drückbar ist.

4. Brühmodul nach einem der Ansprüche 1 bis 3, **dadurch gekennzeichnet, dass** die Kompressionsmittel so ausgebildet sind, dass sie selektiv an einer zentralen Region der Kapsel angreifen.

5. Brühmodul nach einem der vorangehenden Ansprüche, **dadurch gekennzeichnet, dass** die Brühkammer zur Aufnahme einer würfelförmigen oder quaderförmigen Kapsel ausgebildet ist.

6. Brühmodul nach einem der vorangehenden Ansprüche, **dadurch gekennzeichnet, dass** das erste Brühmodulteil eine Kapselaufnahme mit einer Auflage (21) und einer seitlichen Führung (14) bildet, wobei die Auflage so positioniert ist, dass die über die Einwurfposition eingeworfene Kapsel durch die seitliche Führung geführt auf der Auflage (21) zu liegen kommt, und dass das zweite Brühmodulteil (4) zum Verschliessen der Brühkammer relativ zum ersten Brühmodulteil (3) linear unter Beibehaltung der Orientierung der Kapsel bewegbar ist.

7. Brühmodul nach einem der vorangehenden Ansprüche, wobei das Brühmodul eine Einwurfposition definiert, **dadurch gekennzeichnet, dass** das erste Brühmodulteil eine Kapselaufnahme mit einer Auflage (21) und einer seitlichen Führung (14) bildet, wobei die Auflage so positioniert ist, dass die über die Einwurfposition eingeworfene Kapsel durch die seitliche Führung geführt auf der Auflage (21) zu liegen kommt, dass das zweite Brühmodulteil (4) zum Verschliessen der Brühkammer relativ zum ersten Brühmodulteil (3) linear unter Beibehaltung der Orientierung der Kapsel bewegbar ist, und dass die Auflage (21) und die seitliche Führung (14) ein Teil der Wandung der Brühkammer bilden.

8. Brühmodul nach Anspruch 7, **dadurch gekennzeichnet, dass** eine Auflagefläche (20) der Auflage (21) um zwischen 2° und 10° gegenüber der Horizontalen verkippt ist

9. Brühmodul nach Anspruch 7 oder 8, **dadurch gekennzeichnet, dass** die Wandung der Brühkammer (50) die Brühkammer bis auf Einleit- und Ausleitöffnungen für die Brühflüssigkeit vollständig umschliesst.

10. Brühmodul nach Anspruch 9, **dadurch gekennzeichnet, dass** die Ausleitvorrichtung eine Ausleitplatte mit mindestens einer von der Ausleitplatte in die Brühkammer ragenden Ausleit-Anstechspitze (11) und der Injektor eine der Ausleitplatte gegenüber angeordnete Injektorplatte mit mindestens einer von der Injektorplatte in die Brühkammer ragenden Injektor-Anstechspitze (12) aufweisen, dass das zweite Brühmodulteil (4) einen Brühkammerdeckel (22) aufweist und dass die Kapselaufnahme und das zweite Brühmodulteil passgenau die Brühkammer bildend aneinander fügbar sind, wobei vorzugsweise zwischen Kapselaufnahme und zweitem Brühmodulteil eine Formdichtung vorhanden ist.

11. Brühmodul nach einem der Ansprüche 7 bis 10, **gekennzeichnet durch** Mitnahmemittel zur mechanischen Unterstützung des Kapselauswurfs **durch** Mitnehmen der Kapsel beim Öffnen der Kapsel mit dem zweiten Brühmodulteil bis in eine Position, in welcher die Kapsel in einen Kapselbehälter fallen kann.

12. Brühmodul nach Anspruch 11 **dadurch gekennzeichnet, dass** das zweite Brühmodulteil Seitenwände (15) aufweist, die passgenau mit Seitenwänden (14) des ersten Brühmodulteils zusammenwirken.

13. Extraktionsgerät, beispielsweise Kaffeemaschine, zum portionenweisen Zubereiten eines Getränkes oder anderen Extraktionsprodukts aus einem in einer Kapsel verpackten Extraktionsgut, aufweisend einen Flüssigkeitstank, eine Flüssigkeitspumpe, eine Flüssigkeitsheizungsvorrichtung sowie ein Brühmodul nach einem der vorangehenden Ansprüche, wobei durch den Injektor des Brühmoduls von der Flüssigkeitspumpe geförderte, von durch die Flüssigkeitsheizungsvorrichtung erhitzte Flüssigkeit in eine Kapsel einspritzbar ist.

## Claims

1. A brewing module for an extraction appliance, for example a coffee machine, for the portioned preparation of a drink or another extraction product, from an extraction material packaged in a capsule, comprising a first brewing module part (3) and a second brewing module part (4) which is movable relative to this, wherein the first and the second brewing module part form a discharge device for the discharge of an extraction product out of the capsule, an injector for introducing an extraction fluid into the capsule, and a brewing chamber (50) which at least partly surrounds the capsule during the brewing procedure, wherein the brewing module moreover comprises compression means, by way of which the capsule in the brewing chamber is compressed in a volume-reducing manner, **characterised in that** the movement of the second brewing module part relative to the first brewing module part is effected linearly along an axial direction, and that the compression means compress the capsule along a direction which is different from the axial direction, for example perpendicular thereto.

2. A brewing module according to claim 1, **characterised in that** the compression means comprise at least one pressing element (32), for example a pressing bolt, which projects into the inside of the closed brewing chamber.

3. A brewing module according to claim 2, **characterised in that** the pressing element (32) is radially displaceably mounted in the second brewing module part (4) and can be pressed radially inwards counter to a spring force by way of a control cam (42), given a linear moving of the second brewing module part (4) relative to the first brewing module part (3).

4. A brewing module according to any one of the claims 1 to 3, **characterised in that** the compression means are designed such that they selectively engage on a central region of the capsule.

5. A brewing module according to any one of the preceding claims, **characterised in that** the brewing chamber is designed for receiving a cube-shaped or cuboid-shaped capsule.

6. A brewing module according to any one of the preceding claims, **characterised in that** the first brewing module part forms a capsule receiver with a rest (21) and with a lateral guide (14), wherein the rest is positioned such that the capsule which is inserted in the insertion position and guided by the lateral guide comes to lie on the rest (21), and **in that** the second brewing module part (4) is linearly movable relative to the first brewing module part (3) whilst retaining the orientation of the capsule, for the closure of the brewing chamber.

7. A brewing module according to any one of the preceding claims, wherein the brewing module defines an insertion position, **characterised in that** the first brewing module part forms a capsule receiver with a rest (21) and with a lateral guide (14), wherein the rest is positioned such that the capsule which is inserted in the insertion position and guided by the lateral guide comes to lie on the rest (21), **in that** the second brewing module part (4) is linearly movable relative to the first brewing module part (3) whilst retaining the orientation of the capsule, for closing the brewing chamber, and **in that** the rest (21) and the lateral guide (14) form part of the wall of the brewing chamber.

8. A brewing module according to claim 7, **characterised in that** a rest surface (20) of the rest (21) is tilted by between 2° and 10° with respect to the horizontal.

9. A brewing module according to claim 7 or 8, **characterised in that** the wall of the brewing chamber (50) completely encloses the brewing chamber with the exception of introduction openings and discharge openings for the brewing fluid.

10. A brewing module according to claim 9, **characterised in that** the discharge device comprises a discharge plate with at least one discharge piercing tip (11) projecting from the discharge plate into the brewing chamber, and the injector comprises an injector plate which is arranged opposite the discharge plate and which is with at least one injector piercing tip (12) projecting from the injector plate into the brewing chamber, **in that** the second brewing module part (4) comprises a brewing chamber cover (22) and **in that** the capsule receiver and the second brewing module part can be joined onto one another in an exactly fitting manner and in a manner forming the brewing chamber, wherein a shaped seal is present preferably between the capsule receiver and the second brewing module part.

11. A brewing module according to any one of the claims 7 to 10, **characterised by** catch means for mechanically assisting the ejection of the capsule by way of catching the capsule with the second brewing module part on opening the brewing chamber, until in a position, in which the capsule can drop into a capsule container.

12. A brewing module according to claim 11, **characterised in that** the second brewing module part comprises side walls (15) which cooperate with sides walls (14) of the first brewing module part in an exactly fitting manner.

13. An extraction appliance, for example coffee machine, for the portioned preparation of a drink or other extraction product from an extraction material packaged in a capsule, comprising a fluid tank, a fluid pump, a fluid heating device as well as a brewing module according to any one of the preceding claims, wherein fluid which is delivered by the fluid pump through the injector of the brewing module and heated by the fluid heating device can be injected into a capsule.

## Revendications

1. Module d'infusion pour un appareil d'extraction, par exemple une machine à café, pour la préparation portionnée d'une boisson ou d'autres produits d'extraction à partir d'un matériau d'extraction emballé dans une capsule, le module présentant
une première partie (3) de module d'infusion et une deuxième partie (4) de module d'infusion déplaçable par rapport à la première, la première et la deuxième partie de module d'infusion formant un ensemble d'extraction qui guide la sortie du produit d'extraction hors de la capsule, un injecteur qui introduit un liquide d'extraction dans la capsule, et une chambre d'infusion (50) qui entoure au moins en partie la capsule lors de l'opération d'infusion,
le module d'infusion présentant en outre des moyens de compression par lesquels la capsule est comprimée et voit son volume diminuer dans la chambre d'infusion, **caractérisé en ce que**
le déplacement de la deuxième partie du module d'infusion par rapport à la première partie du module d'infusion s'effectue linéairement le long d'une direction axiale et
**en ce que** les moyens de compression compriment la capsule dans une direction différente de la direction axiale, par exemple une direction perpendiculaire à celle-ci.

2. Module d'infusion selon la revendication 1, **caractérisé en ce que** les moyens de compression présentent au moins un élément de compression (32), par exemple un goujon de compression, qui pénètre à l'intérieur de la chambre d'infusion fermée.

3. Module d'infusion selon la revendication 2, **caractérisé en ce que** l'élément de compression (32) est monté à coulissement radial dans la deuxième partie (4) du module d'infusion et peut être repoussé radialement vers l'intérieur par une courbe de commande (42) en opposition à une force élastique lors du déplacement linéaire de la deuxième partie (4) du module d'infusion par rapport à la première partie (3) du module d'infusion.

4. Module d'infusion selon l'une des revendications 1 à 3, **caractérisé en ce que** les moyens de compression sont configurés de manière à engager sélectivement une partie centrale de la capsule.

5. Module d'infusion selon l'une des revendications précédentes, **caractérisé en ce que** la chambre d'infusion est configurée pour reprendre une capsule en forme de cube ou en forme de parallélépipède.

6. Module d'infusion selon l'une des revendications précédentes, **caractérisé en ce que** la première partie du module d'infusion forme un logement de capsule doté d'un support (21) et d'un guide latéral (14), le support étant positionné de telle sorte que la capsule introduite par l'intermédiaire d'une position d'introduction vient se placer sur le support (21) en étant guidée par le guide latéral et **en ce que** la deuxième partie (4) du module d'infusion peut être déplacée en respectant l'orientation de la capsule pour fermer la chambre d'infusion par rapport à la première partie (3) du module d'infusion.

7. Module d'infusion selon l'une des revendications précédentes, dans lequel le module d'infusion définit une position d'introduction, **caractérisé en ce que**
la première partie du module d'infusion forme un logement de capsule doté d'un support (21) et d'un guide latéral (14), le support étant positionné de telle sorte que la capsule introduite par l'intermédiaire de la position d'introduction vient se placer sur le support (21) en étant guidée par le guide latéral et **en ce que** la deuxième partie (4) du module d'infusion peut être déplacée en respectant l'orientation de la capsule pour fermer la chambre d'infusion par rapport à la première partie (3) du module d'infusion et
**en ce que** le support (21) et le guide latéral (14) forment une partie de la paroi de la chambre d'infusion.

8. Module d'infusion selon la revendication 7, **caractérisé en ce qu'**une surface du support (20) du support (21) est inclinée d'un angle compris entre 2° et 10° par rapport à l'horizontale.

9. Module d'infusion selon les revendications 7 ou 8, **caractérisé en ce que** la paroi de la chambre d'infusion (50) entoure complètement la chambre d'infusion à l'exception des ouvertures d'introduction et de sortie du liquide d'infusion.

10. Module d'infusion selon la revendication 9, **caractérisé en ce que** l'ensemble d'extraction présente une plaque d'extraction qui présente au moins une pointe de perforation (11) de l'ensemble d'extraction qui déborde dans la chambre d'infusion depuis la plaque d'extraction et l'injecteur présente une plaque d'injecteur disposée face à la plaque d'extraction et présentant au moins une pointe de perforation (12) de l'injecteur, **en ce que** la deuxième partie (4) du module d'infusion présente un couvercle (22) de chambre d'infusion et **en ce que** le logement de capsule et la deuxième partie du module d'infusion peuvent être joints l'un à l'autre pour former exactement la chambre d'infusion, un joint d'étanchéité façonné étant prévu de préférence entre le logement de capsule et la deuxième partie du module d'infusion.

11. Module d'infusion selon l'une des revendications 7 à 10, **caractérisé par** des moyens d'entraînement qui soutiennent mécaniquement l'expulsion de la capsule en entraînant la capsule lors de l'ouverture de la chambre d'infusion par la deuxième partie du module d'infusion jusque dans une position dans laquelle la capsule peut tomber dans un récipient à capsules.

12. Module d'infusion selon la revendication 11, **caractérisé en ce que** la deuxième partie du module d'infusion présente des parois latérales (15) qui coopèrent de manière ajustée avec des parois latérales (14) de la première partie du module d'infusion.

13. Appareil d'extraction, par exemple machine à café, pour la préparation portionnée d'une boisson ou d'un autre produit d'extraction à partir d'une matière d'extraction emballée dans une capsule, l'appareil présentant une cuve à liquide, une pompe à liquide, un ensemble de chauffage de liquide ainsi qu'un module d'infusion selon l'une des revendications précédentes, le liquide refoulé par la pompe et chauffé par l'ensemble de chauffage de liquide pouvant être injecté dans une capsule à travers l'injecteur du module d'infusion.
